# EUROPÄISCHE PATENTSCHRIFT

(11) **EP 4 440 387 B1**
(45) Veröffentlichungstag und Bekanntmachung des Hinweises auf die Patenterteilung: **14.01.2026**
(21) Anmeldenummer: 22817220.1
(22) Anmeldetag: 10.11.2022
(51) Int. Cl.: A47J 27/04, F24C 15/32

(54) **HAUSHALTSGARGERÄT MIT HORIZONTAL AUSFAHRBARER DAMPFBEHANDLUNGSSCHUBLADE**
DOMESTIC COOKING APPLIANCE HAVING A HORIZONTALLY EXTENDING STEAM TREATMENT DRAWER
APPAREIL DE CUISSON À LA VAPEUR AVEC TIROIR DE TRAITEMENT À LA VAPEUR EXTENSIBLE HORIZONTALEMENT

(30) Priorität: 01.12.2021 DE 102021213622
(43) Veröffentlichungstag der Anmeldung: 09.10.2024
(73) Patentinhaber: BSH Hausgeräte GmbH, 81739 München (DE)
(72) Erfinder: BALL, Ludovic, 67770 Sessenheim (FR); SCHLEGEL, Markus, 75015 Bretten (DE); SAUERBIER, Rolf, 76275 Ettlingen (DE)
(86) Internationale Anmeldenummer: PCT/EP2022/081554
(87) Internationale Veröffentlichungsnummer: WO 2023/099159

(56) Entgegenhaltungen:
- WO-A1-2021/228647
- CN-U- 203 723 885

## Beschreibung

Die Erfindung betrifft ein Haushaltsgargerät, aufweisend eine aus einem Schubladengehäuse frontseitig horizontal ausfahrbare Dampfbehandlungsschublade, die eine mit Dampf beaufschlagbare Dämpferwanne, deren offene Oberseite mittels eines Deckels abdeckbar ist, aufweist, und aufweisend mindestens einen Ventilator, der dazu vorgesehen ist, aus der Dämpferwanne austretenden Dampf aus dem Haushaltsgargerät zu fördern. Die Erfindung betrifft auch ein entsprechendes Verfahren. Die Erfindung ist insbesondere vorteilhaft anwendbar auf Multi-Cavity-Haushaltsgargeräte mit der Dampfbehandlungsschublade und mindestens einem weiteren Haushalts-Wärmebehandlungsgerät, insbesondere Backofen.

Bekannt ist ein Haushalts-Dampfbehandlungsgerät, das eine aus einem Schubladengehäuse frontseitig horizontal ausfahrbare Dampfbehandlungsschublade besitzt, die eine mit Dampf beaufschlagbare Dämpferwanne aufweist, deren offene Oberseite mittels eines klappbaren Glasdeckel abdeckbar ist. Überschüssiger Dampf kann durch Öffnung(en) im Deckel austreten. CN 203 723 885 U offenbart beispielsweise ein derartiges Haushalts-Dampfbehandlungsgerät.

Es ist die **Aufgabe** der vorliegenden Erfindung, die Nachteile des Standes der Technik zumindest teilweise zu überwinden und insbesondere eine besonders nutzerfreundliche, sichere und verlässliche Ausleitung von überschüssigem Dampf aus einer Dämpferwanne einer Dampfbehandlungsschublade bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Haushaltsgargerät, aufweisend eine aus einem Schubladengehäuse frontseitig horizontal ausfahrbare Dampfbehandlungsschublade, die eine mit Dampf beaufschlagbare Dämpferwanne aufweist, deren offene Oberseite mittels eines Deckels abdeckbar ist, und aufweisend mindestens einen Ventilator, der dazu vorgesehen (d.h., ausgestaltet und angeordnet) ist, aus der Dämpferwanne austretenden Dampf durch mindestens eine frontseitige Dampfaustrittsöffnung des Haushaltsgargeräts zu fördern.

Dieses Haushaltsgargerät weist den Vorteil auf, dass mittels des Ventilators bzw. Lüfters eine gut definierte Dampfablassströmung des ausgetretenen Dampfs erzeugbar ist. Insbesondere lässt sich vorteilhafterweise auch ein besonders schneller Dampfabzug umsetzen. Durch den Dampfaustritt an der mindestens einen frontseitigen Dampfaustrittsöffnung wird zudem insbesondere bei Einbaugeräten vermieden, benachbarte Küchenmöbel oder Wände mit Dampf zu benetzen, was Beschädigung und Schimmelbildung dieser Teile vermeidet. Ein weiterer Vorteil besteht darin, dass ein Nutzer kein aus dem Dampf ausfallendes Kondensat zu entfernen braucht, so wie es ansonsten bei einer Abluftlösung mit integriertem Kondensator geschehen müsste.

Die Kombination aus Dampfbehandlungsschublade und Schubladengehäuse kann auch als "Dampfbehandlungsgerät" bezeichnet werden.

Die Dampfbehandlungsschublade ist frontseitig horizontal aus dem Schubladengehäuse ausfahrbar und horizontal in das Schubladengehäuse einfahrbar. Das Ausfahren kann rein mechanisch durch den Nutzer vorgesehen sein, z.B. durch manuelles Ausziehen, oder kann kraftunterstützt vorgesehen sein, z.B. durch mechanische Feder(n) oder pneumatische oder hydraulische Druckfeder(n), beispielsweise als "Push-to-Open"-Mechanismus. Auch ist ein vollmotorisches Ausfahren möglich. Das Einfahren kann beispielsweise ebenfalls rein mechanisch, z.B. durch manuelles Eindrücken, oder motorisch vorgesehen sein.

Die Dämpferwanne ist als Behältnis zum Unterbringen von dampfzubehandelndem Gut, insbesondere Gargut, vorgesehen, wobei deren offene Oberseite als Beschickungsöffnung dient.

Dass die Dämpferwanne mit Dampf beaufschlagbar ist, kann umfassen, dass die Dampfbehandlungsschublade einen Dampferzeuger bzw. Verdampfer zum Erzeugen von Nassdampf und/oder Trockendampf aufweist und dieser Dampf während eines Dampfbehandlungsvorgangs in die mit dem Deckel abgedeckte Dämpferwanne geleitet wird. Die Dämpferwanne und der geschlossene Deckel bilden somit einen Dampfbehandlungsraum. Alternativ kann zu verdampfendes Wasser durch einen Nutzer direkt in die Dämpferwanne gegeben werden.

Der Deckel kann eine eigenständige Komponente sein, kann ein Teil der Dampfbehandlungsschublade sein (z.B. an der Schublade verschwenkbar und/oder horizontal verfahrbar anordnet sein) oder kann ein Teil des Schubladengehäuses sein. Der Deckel kann ein Glasdeckel sein.

Dass die offene Oberseite der Dämpferwanne mittels des Deckels abdeckbar ist, kann in einer Weiterbildung umfassen, dass der Deckel im geschlossenen Zustand dampfdicht auf der Dämpferwanne aufliegt. Jedoch kann bei ausreichendem Dampfdruck in dem Dampfbehandlungsraum möglicherweise der Fall eintreten, dass der Deckel leicht angehoben wird, so dass dennoch Dampf durch einen Spalt zwischen Dämpferwanne und Deckel austritt. Der aus der Dämpferwanne austretende Dampf kann allgemein durch den Spalt zwischen Dämpferwanne und Deckel, durch Löcher in dem Deckel oder durch einen dazu vorgesehenen Dampfauslasskanal der Dämpferwanne austreten.

Mindestens ein Ventilator kann eine Komponente der Dampfbehandlungsschublade sein. Mindestens ein Ventilator kann eine Komponente des Schubladengehäuses sein.

Der mindestens eine Ventilator kann z.B. ein Axiallüfter oder ein Radiallüfter sein.

Es ist eine Ausgestaltung, dass mindestens eine frontseitige Dampfaustrittsöffnung in einer frontseitigen Blende der Dampfbehandlungsschublade und/oder mittels eines Spalts zwischen dem Schubladengehäuse und der Dampfbehandlungsschublade ausgebildet ist. Dies ergibt den Vorteil, dass keine langen Dampfwege benötigt werden und der frontseitige Dampfablass allein mittels der Dampfbehandlungsschublade und des Schubladengehäuses realisierbar sind.

Alternativ kann die mindestens eine frontseitige Dampfaustrittsöffnung des Haushaltsgargeräts an einer anderen frontseitigen Abdeckung des Haushaltsgargeräts angeordnet sein, bei einem Multi-Cavity-Gerät beispielsweise an einer über einem weiteren Wärmebehandlungsgerät angeordneten Frontblende, an einer Frontblende eines Schalterraums usw.

Es ist eine Ausgestaltung der Erfindung , dass das Dampfbehandlungsgerät, insbesondere die Dampfbehandlungsschublade, eine Kammer (im Folgenden ohne Beschränkung der Allgemeinheit als "Vorkammer" bezeichnet) aufweist, die mit einer Dampfeinlassöffnung, die lufttechnisch mit der Dämpferwanne verbindbar ist, einer zu der Umgebung hin offenen Öffnung (im Folgenden ohne Beschränkung der Allgemeinheit als "Steuerungsöffnung" bezeichnet) mit variabel einstellbarem Strömungsquerschnitt und einer Auslassöffnung, die mit der mindestens einen frontseitigen Dampfaustrittsöffnung lufttechnisch verbunden ist, ausgerüstet ist, wobei die Dampfeinlassöffnung und die Steuerungsöffnung saugseitig des mindestens einen Ventilators angeordnet sind und die mindestens eine frontseitige Dampfaustrittsöffnung druckseitig des mindestens einen Ventilators angeordnet ist. So wird der Vorteil erreicht, dass durch Variation des Strömungsquerschnitts eingestellt werden kann, ob viel Dampf (z.B. bei geschlossenem Strömungsquerschnitt) für eine schnelle Dampfentleerung der Dämpferwanne, z.B. vor Öffnen des Deckels der Dämpferwanne, oder wenig Dampf (z.B. bei weit offenem Strömungsquerschnitt) für eine verbesserte Energieeffizienz aus der Dämpferwanne abgesaugt werden soll. Dabei wird ausgenutzt, dass dann, wenn der Ventilator läuft, an der Dampfeinlassöffnung ein Unterdruck entsteht, der abhängig von der Größe des Strömungsquerschnitts ist: je geringer der Strömungsquerschnitt der Steuerungsöffnung ist, desto größer ist der Unterdruck an der Dampfeinlassöffnung. Ein weiterer Vorteil besteht darin, dass auf einen vergleichsweise aufwändig ansteuerbaren und teuren drehzahlgeregelten Ventilator bzw. Lüfter verzichtet werden kann und stattdessen ein nicht-drehzahlgeregelter Ventilator einsetzbar ist.

Dass der Strömungsquerschnitt variabel einstellbar ist, bedeutet insbesondere, dass er durch das Haushaltsgargerät, insbesondere Dampfbehandlungsgerät, selbsttätig einstellbar ist, und zwar insbesondere zumindest zwischen einer Endstellung mit geschlossenem Strömungsquerschnitt und einer Endstellung mit maximalem Strömungsquerschnitt. Es ist eine Weiterbildung, dass der Strömungsquerschnitt auch auf mindestens eine Zwischenstellung zwischen den beiden Endstellungen einstellbar ist.

Dass die Steuerungsöffnung zu der Umgebung hin offen ist, bedeutet insbesondere, dass durch sie Luft ("Umgebungsluft") aus der freien Umgebung der Vorkammer einsaugbar ist. Dass die Dampfeinlassöffnung lufttechnisch mit der Dämpferwanne verbindbar ist, bedeutet insbesondere, dass bei Vorliegen der Verbindung Dampf aus der Dämpferwanne durch die Dampfeinlassöffnung in die Vorkammer strömen kann. Dazu kann die Dämpferwanne direkt oder über einen Kanal mit der Dampfeinlassöffnung verbindbar sein. Dass die Auslassöffnung mit der mindestens einen frontseitigen Dampfaustrittsöffnung lufttechnisch verbunden ist, bedeutet insbesondere, dass Fluid (der Dampf oder ein Dampf/Umgebungsluft-Gemisch) aus der Vorkammer durch die Auslassöffnung zu der mindestens einen frontseitigen Dampfaustrittsöffnung strömt bzw. geführt wird.

Dass die Dampfeinlassöffnung und die Steuerungsöffnung saugseitig des mindestens einen Ventilators angeordnet sind, umfasst, dass bei Betrieb des Ventilators Dampf durch die Dampfeinlassöffnung und Umgebungsluft durch die (offene) Steuerungsöffnung in die Vorkammer saugbar sind. Dass die mindestens eine frontseitige Dampfaustrittsöffnung druckseitig des mindestens einen Ventilators angeordnet ist, umfasst, dass bei Betrieb des Ventilators in der Vorkammer befindliches gasförmiges Fluid durch die Auslassöffnung der Vorkammer gefördert und zu der mindestens einen frontseitigen Dampfaustrittsöffnung gedrückt wird. Der Ventilator kann in einer Weiterbildung in der Vorkammer angeordnet sein, in welchem Fall die Auslassöffnung an einer Druckseite des Ventilators angeordnet ist. Der Ventilator kann in einer Weiterbildung in dem Luftkanal zwischen der Vorkammer bzw. der Auslassöffnung einerseits und der mindestens einen frontseitigen Dampfaustrittsöffnung andererseits angeordnet sein, in welchem Fall die Auslassöffnung an einer Saugseite des Ventilators angeordnet ist.

Es ist eine Ausgestaltung, dass der Steuerungsöffnung eine verstellbare Verschlussklappe zugeordnet ist, über deren Bewegung, insbesondere Verschwenkung, der Strömungsquerschnitt einstellbar ist. Dies ist besonders einfach und preiswert umsetzbar und ermöglicht besonders große Strömungsquerschnitte bei geringem Bedarf an Bauraum. Die Verstellung der Verschlussklappe ist z.B. mittels eines Elektromotors, eines Magnetschalters usw. umsetzbar. Jedoch kann der Strömungsquerschnitt auch auf andere Arten verstellt werden, z.B. durch ein Ventil usw.

Es ist eine alternative Ausgestaltung der Erfindung, dass das Dampfbehandlungsgerät, insbesondere die Dampfbehandlungsschublade, eine Kammer ("Vorkammer") mit einer Dampfeinlassöffnung, die lufttechnisch mit der Dämpferwanne verbindbar ist, und einer Auslassöffnung, die mit der mindestens einen frontseitigen Dampfaustrittsöffnung lufttechnisch verbunden ist, aufweist, wobei die Dampfeinlassöffnung saugseitig des mindestens einen Ventilators angeordnet ist und die mindestens eine frontseitige Dampfaustrittsöffnung druckseitig des mindestens einen Ventilators angeordnet ist und der Ventilator ein drehzahlregelbarer Ventilator ist. So wird der Vorteil erreicht, dass auf das Vorsehen der Steuerungsöffnung verzichtet werden kann. Es ist eine Weiterbildung, dass die Vorkammer in der Dampfbehandlungsschublade untergebracht ist.

Grundsätzlich ist es auch möglich, eine Vorkammer mit Steuerungsöffnung mit variabel einstellbarem Strömungsquerschnitt und zusätzlich einen drehzahlregelbarer bzw. drehzahlgeregelten Ventilator vorzusehen.

Es ist eine Ausgestaltung, dass die Dämpferwanne nutzerseitig von oben in die Dampfbehandlungsschublade einsetzbar ist und folglich nutzerseitig auch wieder in einer Bewegung nach oben aus der Dampfbehandlungsschublade entnehmbar ist, z.B. zur einfacheren Reinigung oder Bestückung.

Es ist eine Ausgestaltung, dass die Dämpferwanne einen Dampfauslasskanal aufweist, die Dampfeinlassöffnung oberseitig in der Vorkammer eingebracht ist und der Dampfauslasskanal von oben in die Dampfeinlassöffnung einsetzbar ist. So wird der Vorteil erreicht, dass die Dämpferwanne bei Einsetzen in die Dampfbehandlungsschublade ohne weitere Maßnahmen auch mit der Vorkammer lufttechnisch gekoppelt wird. Insbesondere kann der Dampfauslasskanal mit der Dampfeinlassöffnung dampfdicht verbunden werden, z.B. durch Einstecken des Dampfauslasskanals in eine konforme Dampfeinlassöffnung, ggf. unter Verwendung einer umlaufenden Dichtung.

Es ist eine Ausgestaltung, dass die Vorkammer (bei Frontansicht auf das Dampfbehandlungsgerät) rückwärtig bzw. hinter der Dämpferwanne angeordnet ist und deren Auslassöffnung über mindestens einen Verbindungskanal mit der mindestens einen frontseitigen Dampfaustrittsöffnung verbunden ist. Dies ergibt den Vorteil, dass für die Vorkammer kein Bauraum vor der Dämpferwanne vorgesehen zu werden braucht, sondern dort z.B. der Verdampfer, ein Wassertank zur Versorgung des Verdampfers mit Wasser und/oder eine Elektronik untergebracht werden können.

Es ist eine Ausgestaltung, dass im Bereich des Dampfauslasskanals, insbesondere in dem Dampfauslasskanal oder an der Dampfeinlassöffnung, mindestens ein Temperatursensor angeordnet ist. Dies ergibt den Vorteil, dass dort die Temperatur des Dampfs messbar ist, was dazu verwendet werden kann, auf die Energieaufnahme aus dem Dampf durch das Gargut zu schließen. Dies wiederum kann genutzt werden, um einen Volumenstrom des in die Dämpferwanne eingeleiteten Dampfs für ein besonders gelungenes Garergebnis zu einzustellen.

Es ist eine Weiterbildung, dass der Strömungsquerschnitt so eingestellt wird oder gezielt einstellbar ist, dass sich ein für eine besonders zuverlässige Messung der Dampf(auslass)temperatur vorteilhafter Volumenstrom des durch die Dampfeinlassöffnung in die Vorkammer einströmenden Dampfs einstellt bzw. einstellbar ist.

Es ist eine Ausgestaltung, dass der mindestens eine Ventilator dazu vorgesehen ist, bei eingefahrener Dampfbehandlungsschublade eine an der Dampfbehandlungsschublade entlangströmende Luftströmung zu erzeugen, die durch die mindestens eine frontseitige Dampfaustrittsöffnung des Dampfbehandlungsgeräts ausgeblasen wird. Dadurch kann aus dem Dampfbehandlungsraum austretender Dampf mit geringem baulichen Aufwand direkt mitgenommen und ausgeblasen werden. Insbesondere wird vorteilhafterweise auch Dampf ausgeblasen, der unkanalisiert, z.B. durch einen Spalt zwischen Dämpferwanne und Deckel, aus dem Dampfbehandlungsraum austritt.

Es ist eine Ausgestaltung, dass der mindestens eine Ventilator dazu vorgesehen ist, bei eingefahrener Dampfbehandlungsschublade eine an der Oberseite der Dampfbehandlungsschublade entlangströmende Luftströmung zu erzeugen. Diese ist vorteilhafterweise besonders dazu geeignet, aufsteigenden entweichenden Dampf mitzunehmen. Bei dieser Ausgestaltung wird ausgenutzt, dass zwischen der Oberseite der Dampfbehandlungsschublade und der Decke des Schubladengehäuses ein Zwischenraum besteht, der mit der mindestens einen frontseitigen Dampfaustrittsöffnung in Verbindung steht (z.B. darin mündet bzw. die mindestens eine frontseitige Dampfaustrittsöffnung eine Mündung oder einen Mündungsbereich des Zwischenraums darstellt) und durch den Ventilator vergleichsweise einfach eine Luftströmung durch den Zwischenraum erzeugbar ist, welche das darin befindliche gasförmige Fluids nach vorne zu der mindestens einen frontseitige Dampfaustrittsöffnung fördert. Die mindestens eine frontseitige Dampfaustrittsöffnung entspricht dann vorteilhafterweise einem frontseitigen Spalt zwischen dem Schubladengehäuse und der Dampfbehandlungsschublade, insbesondere deren Frontblende.

Das Dampfbehandlungsgerät ist in einer Weiterbildung ein eigenständiges Haushaltsgargerät und kann dann auch als Haushalts-Dampfbehandlungsgerät bezeichnet werden.

Das Dampfbehandlungsgerät kann in einer Weiterbildung eine Komponente eines Haushaltsgargeräts sein, das zusätzlich mindestens ein weiteres Wärmebehandlungsgerät aufweist. Die Aufgabe wird somit ferner gelöst durch ein Haushaltsgargerät, aufweisend ein Dampfbehandlungsgerät wie oben beschrieben und mindestens ein weiteres Wärmebehandlungsgerät. Das mindestens eine weitere Wärmebehandlungsgerät kann beispielsweise ein Gerät zum Warmhalten, ein Backofen, ein Mikrowellengerät oder eine Kombination daraus sein, oder auch ein noch anders geartetes Gargerät. Ein solches Haushaltsgargerät kann auch als "Multi-Cavity"-Haushaltsgargerät bezeichnet werden, speziell falls Gut in der Dampfbehandlungsschublade und Gut in dem weiteren Wärmebehandlungsgerät individuell behandelbar ist. Das weitere Wärmebehandlungsgerät und die Dampfbehandlungsschublade können einen gemeinsamen Korpus bzw. Außengehäuse aufweisen und beispielsweise ab Werk als Kombigerät ausgeliefert werden. Es ist eine Weiterbildung, dass das weitere Wärmebehandlungsgerät und die Dampfbehandlungsschublade in einer Über-Unter-Anordnung angeordnet sind. Für eine einfache Bedienbarkeit der Dampfbehandlungsschublade ist es vorteilhaft, wenn diese unter dem weiteren Wärmebehandlungsgerät angeordnet ist.

Es ist eine Weiterbildung, dass das weitere Wärmebehandlungsgerät ein Backofen mit oder ohne Mikrowellenfunktion und/oder Pyrolysefunktion ist und eine Höhe von 45 cm aufweist. Es ist eine Weiterbildung, dass das darunter angeordnete Dampfbehandlungsgerät eine Höhe von 15 cm aufweist. Das Multi-Cavity-Haushaltsgargerät weist dann eine Höhe von 60 cm auf.

Es ist eine Ausgestaltung, dass das Haushaltsgargerät ein Abluftsystem aufweist, das dazu vorgesehen ist, aus dem weiteren Wärmebehandlungsgerät austretende Abluft durch die mindestens eine frontseitige Abluftaustrittsöffnung zu fördern, wobei die Dämpferwanne bei eingefahrener Dampfbehandlungsschublade lufttechnisch mit dem Abluftsystem koppelbar bzw. gekoppelt ist. Dann dient das Abluftsystem also auch zum Fördern von Dampf aus der Dämpferwanne. So wird der Vorteil erreicht, dass sich das Haushaltsgargerät besonders einfach und preiswert mit nur wenigen zusätzlichen Bauteilen umsetzen lässt. Ein weiterer Vorteil besteht darin, dass keine Luftströmung zusätzlich zu der aus dem meist bereits üblicherweise vorhandenen Abluftsystem des weiteren Wärmebehandlungsgerät austretenden Luftströmung erzeugt wird bzw. kein gesonderter Abluftstrom aus der Dampfbehandlungsschublade erzeugt wird. Dies wiederum ergibt den Vorteil, dass keine unkontrollierte Störung eines Belüftungssystems des weiteren Wärmebehandlungsgerät (z.B. eine Türbelüftung) auftritt. Das Abluftsystem (häufig auch als "Wrasenabzug" bezeichnet) umfasst typischerweise einen Ventilator (häufig als "Wrasenlüfter" bezeichnet), der die Abluft (insbesondere bei Garvorgängen häufig als "Wrasen" bezeichnet) durch das Abluftsystem fördert.

Dass die Dämpferwanne bei Einfahren der Dampfbehandlungsschublade mit dem Abluftsystem lufttechnisch koppelbar ist bzw. bei eingefahrener Dampfbehandlungsschublade lufttechnisch mit dem Abluftsystem gekoppelt ist, kann beispielsweise dadurch umgesetzt sein, dass ein Kupplungselement einer Luftkupplung (z.B. ein von der Dampfbehandlungsschublade nach hinten vorstehendes Rohr, das mit der Dämpferwanne lufttechnisch koppelbar ist) bei Einfahren der Schublade mit einem Kupplungsgegenelement der Luftkupplung (z.B. einer in dem Schubladengehäuse angeordneten Kammer mit einem Loch, in welches das Rohr dampfdicht einsteckbar ist), das mit dem Abluftsystem verbunden ist bzw. einen Teil des Abluftsystems darstellt, luftdurchlässig kuppelt. Bei Ausfahren der Dampfbehandlungsschublade wird die Luftkupplung wieder getrennt.

Es ist eine Weiterbildung, dass das Abluftsystem unabhängig von einem Betrieb des weiteres Wärmebehandlungsgeräts aktivierbar ist, so dass die Dampfabsaugung aus der Dampfbehandlungsschublade auch bei ausgeschaltetem bzw. nicht betriebenem weiteren Wärmebehandlungsgerät durchgeführt werden kann. In diesem Sinne kann das Abluftsystem auch als kombiniertes Abluftsystem für die Dampfbehandlungsschublade und das weitere Wärmebehandlungsgerät angesehen werden.

Es ist eine Weiterbildung, dass der Dampf durch einen Schalterraum des Haushaltsgargeräts führt. Dieser Schalterraum kann sich insbesondere oberhalb des weiteren Wärmebehandlungsgeräts befinden.

Es ist eine Ausgestaltung, dass die mindestens eine frontseitige Abluftaustrittsöffnung an dem weiteren Wärmebehandlungsgerät oder an dem Schalterraum angeordnet ist.

An dem Kupplungselement der Dampfbehandlungsschublade oder an dem Kupplungsgegenelement des Schubladengehäuses kann ein Temperatursensor angebracht sein, der dazu vorgesehen ist, die Temperatur des durchtretenden Dampfs zu messen.

Die Aufgabe wird darüber hinaus gelöst durch ein Verfahren zum Ablassen von Dampf aus einem Haushaltsgargerät, aufweisend eine aus einem Schubladengehäuse frontseitig horizontal ausfahrbare Dampfbehandlungsschublade, die eine mit Dampf beaufschlagbare Dämpferwanne, deren offene Oberseite mittels eines Deckels abdeckbar ist, aufweist, wobei bei dem Verfahren aus der Dämpferwanne austretender Dampf durch mindestens eine frontseitige Dampfaustrittsöffnung des Haushaltsgargeräts gefördert wird. Das Verfahren kann analog zu dem Haushaltsgargerät ausgebildet werden, und umgekehrt, und weist die gleichen Vorteile auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine Skizze eines Haushaltsgargeräts mit einem Backofen oberhalb eines Dampfbehandlungsgeräts gemäß einem ersten Ausführungsbeispiel;
- Fig.2: zeigt das Dampfbehandlungsgerät gemäß dem ersten Ausführungsbeispiel bei ausgefahrener Dampfbehandlungsschublade in Ansicht von schräg oben;
- Fig.3: zeigt das Dampfbehandlungsgerät gemäß dem ersten Ausführungsbeispiel als Schnittdarstellung durch eine Vorkammer in Schrägansicht;
- Fig.4: zeigt das Dampfbehandlungsgerät gemäß dem ersten Ausführungsbeispiel als Schnittdarstellung in Schrägansicht auf die Vorkammer;
- Fig.5: zeigt das Dampfbehandlungsgerät gemäß dem ersten Ausführungsbeispiel als Schnittdarstellung in Schrägansicht auf die linke Seite;
- Fig.6: zeigt als Schnittdarstellung in Seitenansicht eine Skizze eines Haushaltsgargeräts mit einem Backofen oberhalb eines Dampfbehandlungsgeräts gemäß einem zweiten Ausführungsbeispiel; und
- Fig.7: zeigt als Schnittdarstellung in Seitenansicht eine Skizze eines Haushaltsgargeräts mit einem Backofen oberhalb eines Dampfbehandlungsgeräts gemäß einem dritten Ausführungsbeispiel.

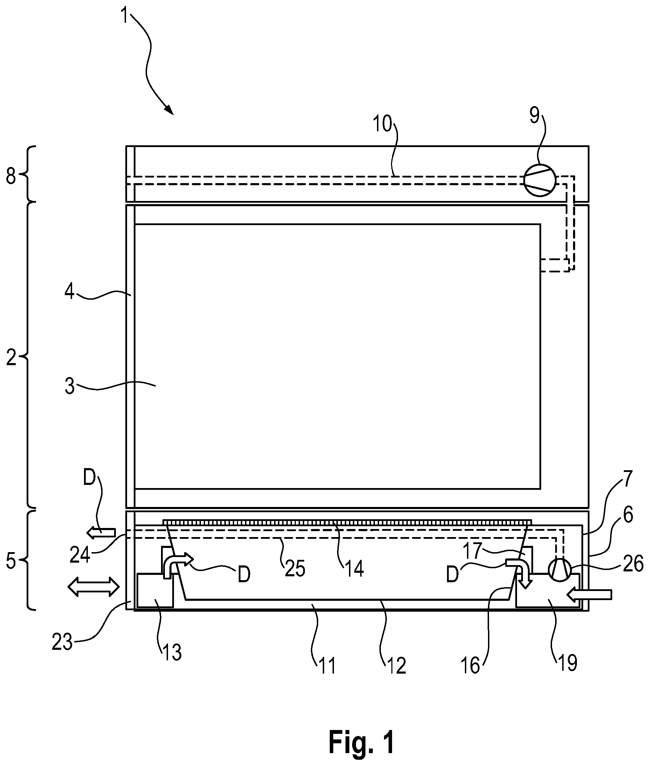

**Fig.1** zeigt als Schnittdarstellung in Seitenansicht eine Skizze eines Haushaltsgargeräts 1. Das ist als Haushaltsgargerät 1 ist als Multi-Cavity-Gerät ausgebildet und weist dazu einen Backofen 2 mit Garraum 3 und frontseitiger verschwenkbarer Tür 4 auf, der oberhalb eines Dampfbehandlungsgeräts 5 mit einer aus einem Schubladengehäuse 6 - wie durch den horizontalen Doppelpfeil angedeutet - frontseitig horizontal ausfahrbaren Dampfbehandlungsschublade 7 ausgerüstet ist. Oberhalb des Backofens 2 ist ein Schalterraum 8 angeordnet, in dem beispielsweise Elektronik zum Betreiben des Backofens 2 und ggf. des Dampfbehandlungsgeräts 5 sowie ein Wrasenlüfter 9 eines Abluftsystems 10 zum Abzug von Abluft, insbesondere Wrasen, aus dem Garraum 3 untergebracht sein kann.

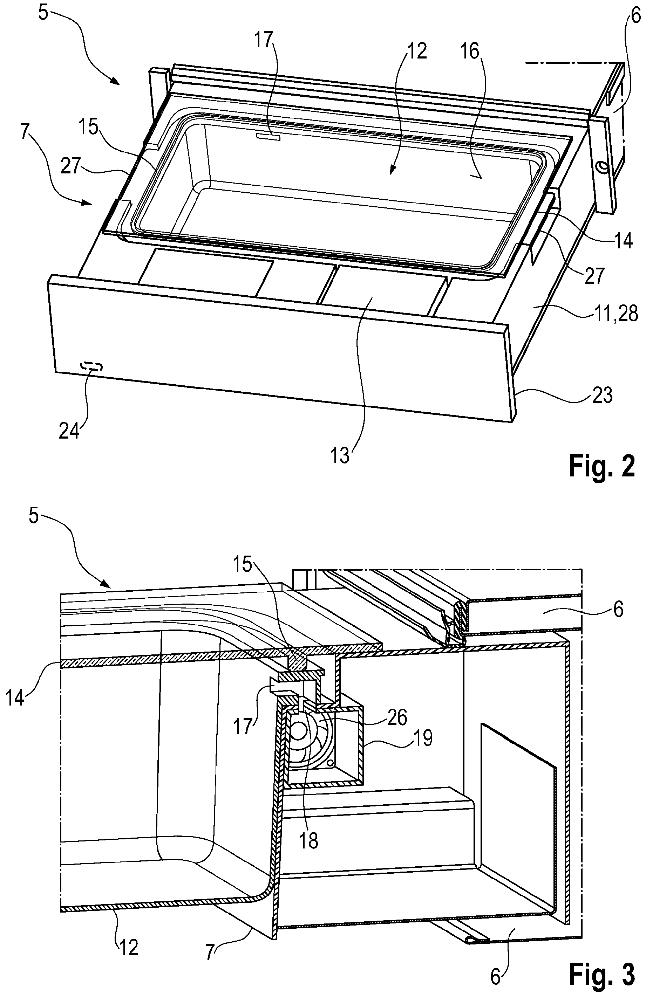

Die Dampfbehandlungsschublade 7 weist einen frontseitig horizontal aus dem Schubladengehäuse 6 ausfahrbaren Tragrahmen 11 auf, in den eine Dämpferwanne 12 von oben einsetzbar und nach oben entnehmbar ist. Der Tragrahmen 11 dient ferner zur Unterbringung eines Verdampfers 13 und ggf. eines Wassertanks (o. Abb.). Mittels des Verdampfers 13 kann Wasser zum Sieden gebracht werden, wobei der dabei entstehende Dampf D z.B. über eine Dampfkupplung in die Dämpferwanne 12 eingetragen wird und dort befindliches Gut dampfbehandeln kann. Das Gut ist durch eine offene, als Beschickungsöffnung dienende Oberseite in die Dämpferwanne 12 eingebracht worden. Zur Dampfbehandlung ist die Oberseite mittels eines Deckels 14, insbesondere Glasdeckels, dampfdicht abdeckbar. Dazu kann zwischen der Dämpferwanne 12 und dem Deckel 14 eine umlaufende Dichtung 15 (siehe Fig.2) vorhanden sein.

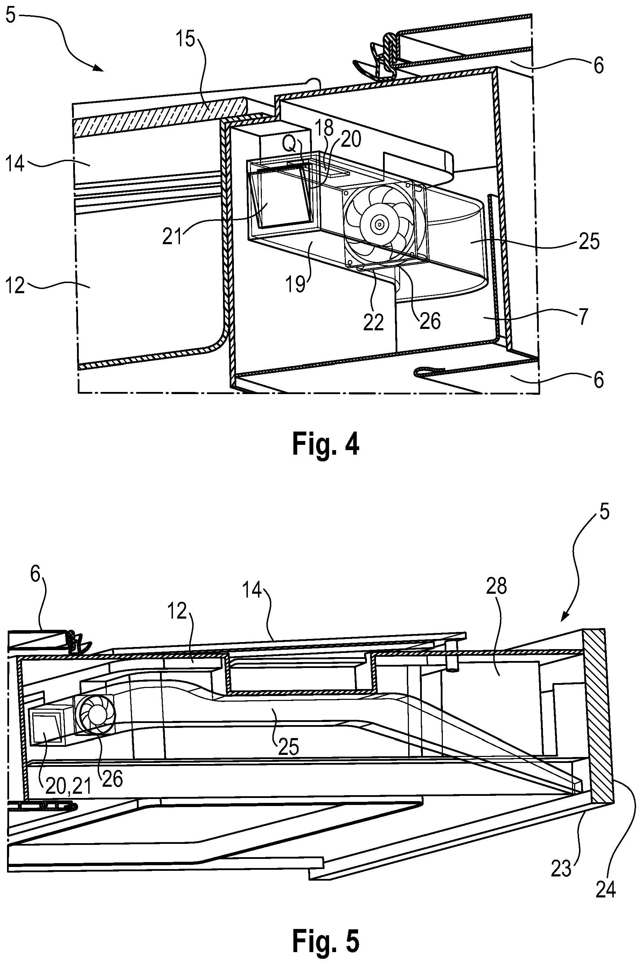

In den (bei Frontansicht auf das Haushaltsgargerät 1) hinteren Wandabschnitt 16 der Dämpferwanne 12 mündet ein Dampfauslasskanal 17 der Dämpferwanne 12, der mit seinem anderen Ende mit einer Dampfeinlassöffnung 18 (siehe Fig.3) einer hinter der Dämpferwanne 12 angeordneten Vorkammer 19 lufttechnisch verbunden ist. Die Vorkammer 19 weist ferner einer zu der Umgebung hin offene Steuerungsöffnung 20 (siehe Fig.4) mit einem mittels einer Verstellung einer Verschlussklappe 21 (siehe Fig.4) variabel einstellbarem Strömungsquerschnitt Q auf. Die Vorkammer 19 weist zudem eine Auslassöffnung 22 (siehe Fig.4) auf, die mit mindestens einer in einer Frontblende 23 der Dampfbehandlungsschublade 7 vorhandenen frontseitigen Dampfaustrittsöffnung 24 lufttechnisch verbunden ist, und zwar hier über einen Luftleitkanal 25. In der Vorkammer 19, insbesondere im Bereich der Auslassöffnung 22, ist ein Ventilator 26 in Form z.B. eines Axiallüfters angeordnet. Die Dampfeinlassöffnung 18 und die Steuerungsöffnung 20 sind an einer Saugseite des Ventilators 26 angeordnet sind und die mindestens eine frontseitige Dampfaustrittsöffnung 24 ist druckseitig des Ventilators 26 angeordnet ist.

Bei laufendem Ventilator 26 kann also durch den Dampfauslasskanal 17 aus der Dämpferwanne 12 austretender Dampf D in die Vorkammer 19 gesaugt, dort bei geöffneter Verschlussklappe 21 mit dadurch eingesaugter Umgebungsluft gemischt und durch den Luftleitkanal 25 zu der frontseitigen Dampfaustrittsöffnung 24 gedrückt.

Der Ventilator 26 ist in einer Weiterbildung ein nicht drehzahlregelbarer Ventilator, der im angeschalteten Zustand beispielsweise mit einer bestimmten Drehzahl dreht. Alternativ oder zusätzlich zu der verstellbaren Verschlussklappe 21 kann ein drehzahlregelbarer Ventilator 26 verwendet werden.

**Fig.2** zeigt das Dampfbehandlungsgerät 5 in einer Variante bei ausgefahrener Dampfbehandlungsschublade 7 in Ansicht von schräg oben. Die Dämpferwanne 12 kann über seitliche Griffe 27 aus dem Tragrahmen 11 herausgehoben werden. Der Tragrahmen 11 weist als Hohlprofile ausgebildete seitliche Wangen 28 auf.

**Fig.3** zeigt das Dampfbehandlungsgerät 5 als Schnittdarstellung durch die den Dampfauslasskanal 17 und die Vorkammer 29 in Schrägansicht. Die Schnittebene ist senkrecht in Ausfahrrichtung ausgerichtet.

Die Dampfeinlassöffnung 18 ist oberseitig in der Vorkammer 19 eingebracht ist, so dass der Dampfauslasskanal 17 der Dämpferwanne 19 beim Einsetzen der Dämpferwanne 12 in den Tragrahmen 11 von oben in die Dampfeinlassöffnung 18 eingesteckt wird. Dabei kann der Dampfauslasskanal 17 an seinem eingesteckten Bereich eine umlaufende Dichtung aufweisen, um diese Dampfkupplung 17, 18 dampfdicht zu gestalten.

In dem Dampfauslasskanal 17 oder im Bereich des Dampfauslasskanals 17 kann mindestens ein Temperatursensor angeordnet sein (o. Abb.).

**Fig.4** zeigt das Dampfbehandlungsgerät 5 als Schnittdarstellung in Schrägansicht auf die halbtransparent gezeigte Vorkammer 19. Die Schnittebene verläuft senkrecht in Ausfahrrichtung der Dampfbehandlungsschublade 7 außerhalb der Vorkammer 19.

Die Vorkammer 19 und der Luftleitkanal 25 sind hier als unterschiedliche Abschnitte eines profilartigen Rohrs mit rechteckigem Querschnitt ausgebildet, wobei der Ventilator 26 in einer Betrachtungsweise als Trennelement zwischen Vorkammer 19 und Luftleitkanal 25 angesehen werden kann. An der dämpferwannenseitigen Stirnseite des Rohrs befindet sich die Steuerungsöffnung 20 mit der Verschlussklappe 21, während die andere Stirnseite des Rohrs als Dampfaustrittsöffnung 24 dient oder zu dieser führt.

**Fig.5** zeigt das Dampfbehandlungsgerät 5 als Schnittdarstellung in Schrägansicht auf die linke Seite der Dampfbehandlungsschublade 7 durch die linke Wange 28 des Tragrahmens 11. In der als Hohlprofil ausgebildeten Wange 28 verläuft der Luftleitkanal 25 von hinten nach vorne zu der in der Frontblende 23 vorhandenen frontseitigen Dampfaustrittsöffnung 24 oder bildet diese dort. Der Deckel 14 ist hier durch Stößel angehoben eingezeichnet.

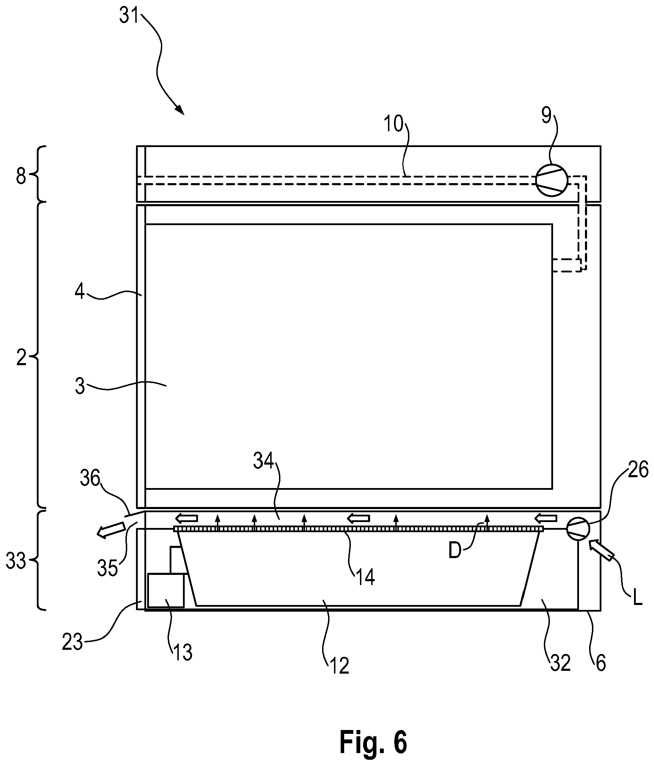

**Fig.6** zeigt als Schnittdarstellung in Seitenansicht eine Skizze eines Haushaltsgargeräts 31. Das Haushaltsgargerät 31 weist den gleichen Grundaufbau auf wie das Haushaltsgargerät 1, wobei die Dampfbehandlungsschublade 32 des Dampfbehandlungsgeräts 33 nun keinen Dampfauslasskanal 17 mit Vorkammer 19 und dediziertem Luftleitkanal 25 aufweist. Vielmehr kann nun unter Umständen, z.B. bei vergleichsweise hohem Dampfdruck in der Dämpferwanne 12, Dampf D durch Öffnungen zwischen Dämpferwanne 12 und Deckel 14 nach oben in den schmalen Deckenraum 34 zwischen Dampfbehandlungsschublade 32 und Schubladengehäuse 7 austreten.

Der Ventilator 26 ist hier hinter der Dämpferwanne angeordnet und saugt bei laufendem Betrieb Umgebungsluft L ein und bläst sie in den Deckenraum 34 nach vorne aus. Dadurch nimmt die Umgebungsluft L den aufgestiegenen Dampf mit und tritt zusammen mit dem Dampf D aus einer frontseitigen Dampfaustrittsöffnung 35 aus, die als Spalt zwischen dem Schubladengehäuse 6 und der Frontblende 23 der Dampfbehandlungsschublade 32 ausgebildet ist. Um zu vermeiden, dass der ausgetretene Dampf D durch ein Türlüftungssystem der Tür 4 des Backofens 2 angesaugt wird, kann oberhalb der Dampfaustrittsöffnung 35 ein Luftleitelement in Form z.B. eines Ablenkblechs 36 vorgesehen sein, welche die aus der Dampfaustrittsöffnung 35 austretende Strömung nach unten und/oder zur Seite ablenkt.

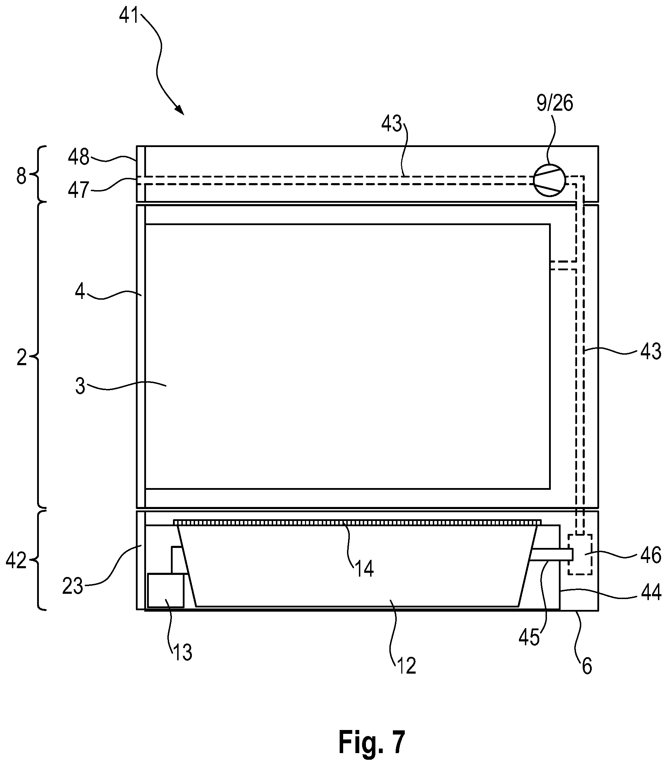

**Fig.7** zeigt als Schnittdarstellung in Seitenansicht eine Skizze eines Haushaltsgargeräts 41. Das Haushaltsgargerät 41 weist den gleichen Grundaufbau auf wie das Haushaltsgargerät 1, wobei jedoch nun der Dampf D aus der Dämpferwanne 12 an dem Dampfbehandlungsgerät 42 ausgeleitet wird, sondern über das Abluftsystem 43 des Haushaltsgargeräts 41, das auch dazu vorgesehen ist, Wrasen aus dem Backofen 2 zu entfernen.

Dazu ist die eingesetzte Dämpferwanne 12 mit einem an einer Rückseite der Dampfbehandlungsschublade 44 horizontal vorstehenden Rohr 45 lufttechnisch verbunden. Beim Einfahren der Dampfbehandlungsschublade 44 wird das Rohr 45 in eine Kammer 46 des Schubladengehäuses 6, die mit dem Abluftsystem 43 verbunden ist, eingesteckt. Rohr 45 und Kammer 46 bilden dann eine dampfdichte Luftkupplung. Der Wrasenlüfter 9 dient dazu, Dampf D aus der Dämpferwanne durch das Rohr 45 und die Kammer 46 in das Abluftsystem 43 zu saugen und, hier beispielhaft durch den Schalterraum 8, zu einer frontseitigen Dampfaustrittsöffnung 47 zu blasen. Damit übernimmt der Wrasenlüfter 9 die Funktion des Ventilators 26. Die Dampfaustrittsöffnung 47 ist hier beispielhaft in oder an einer Frontblende 48 des Schalterraums 8 angeordnet.

Selbstverständlich ist die vorliegende Erfindung nicht auf das gezeigte Ausführungsbeispiel beschränkt.

So kann der Backofen auch eine Mikrowellenfunktion aufweisen, oder anstelle des Backofens ist ein Mikrowellengerät vorgesehen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Haushaltsgargerät
- 2: Backofen
- 3: Garraum
- 4: Garraumtür
- 5: Dampfbehandlungsgerät
- 6: Schubladengehäuse
- 7: Dampfbehandlungsschublade
- 8: Schalterraum
- 9: Wrasenlüfter
- 10: Abluftsystem
- 11: Tragrahmen
- 12: Dämpferwanne
- 13: Verdampfer
- 14: Deckel
- 15: Dichtung
- 16: Hinterer Wandabschnitt der Dämpferwanne
- 17: Dampfauslasskanal
- 18: Dampfeinlassöffnung
- 19: Vorkammer
- 20: Steuerungsöffnung
- 21: Verschlussklappe
- 22: Dampfauslassöffnung
- 23: Frontblende
- 24: Dampfaustrittsöffnung
- 25: Luftleitkanal
- 26: Ventilator
- 27: Griff
- 28: Wange des Tragrahmens
- 31: Haushaltsgargerät
- 32: Dampfbehandlungsschublade
- 33: Dampfbehandlungsgerät
- 34: Deckenraum
- 35: Dampfaustrittsöffnung
- 36: Ablenkblech
- 41: Haushaltsgargerät
- 42: Dampfbehandlungsgerät
- 43: Abluftsystem
- 44: Dampfbehandlungsschublade
- 45: Rohr
- 46: Kammer
- 47: Dampfaustrittsöffnung
- 48: Frontblende des Schalterraums
- D: Dampf
- L: Umgebungsluft
- Q: Querschnittsöffnung

## Patentansprüche

1. Haushaltsgargerät (1; 31; 41), aufweisend
- eine aus einem Schubladengehäuse (6) frontseitig horizontal ausfahrbare Dampfbehandlungsschublade (7; 32; 44), die eine mit Dampf (D) beaufschlagbare Dämpferwanne (12), deren offene Oberseite mittels eines Deckels (14) abdeckbar ist, aufweist, und
- mindestens einen Ventilator (9; 26), der dazu vorgesehen ist, aus der Dämpferwanne (12) austretenden Dampf (D) durch mindestens eine frontseitige Dampfaustrittsöffnung (24; 35; 47) des Haushaltsgargeräts (1; 31; 41) zu fördern, **gekennzeichnet durch** das Haushaltsgerät (1; 31; 41) weiterhin aufweisend
- eine Vorkammer (19) mit einer Dampfeinlassöffnung (18), die lufttechnisch mit der Dämpferwanne (12) verbindbar ist, und einer Auslassöffnung (22), die mit der mindestens einen frontseitigen Dampfaustrittsöffnung (24) lufttechnisch verbunden ist,
wobei
- die Dampfeinlassöffnung (18) saugseitig des mindestens einen Ventilators (26) angeordnet ist und die mindestens eine frontseitige Dampfaustrittsöffnung (24) druckseitig des mindestens einen Ventilators (26) angeordnet ist und wobei die Vorkammer (19)
- entweder eine zu der Umgebung hin offenen Steuerungsöffnung (20) mit variabel einstellbarem Strömungsquerschnitt (Q) aufweist, welche Steuerungsöffnung (20) saugseitig des mindestens einen Ventilators (26) angeordnet ist,
- oder keine zu der Umgebung hin offene Steuerungsöffnung (20) mit variabel einstellbarem Strömungsquerschnitt (Q) aufweist und der Ventilator (26) ein drehzahlregelbarer Ventilator (26) ist.

2. Haushaltsgargerät (1; 31) nach Anspruch 1, bei dem mindestens eine frontseitige Dampfaustrittsöffnung (24; 35) mittels eines Spalts zwischen dem Schubladengehäuse (6) und der Dampfbehandlungsschublade (7; 32) ausgebildet ist.

3. Haushaltsgargerät (1) nach einem der vorhergehenden Ansprüche, wobei dann, wenn die Vorkammer (19) die Steuerungsöffnung (20) aufweist, der Steuerungsöffnung (20) eine verstellbare Verschlussklappe (21) zum Einstellen des Strömungsquerschnitts (Q) zugeordnet ist.

4. Haushaltsgargerät (1) nach einem der vorhergehenden Ansprüche, wobei
- die Dämpferwanne (12) von oben in die Dampfbehandlungsschublade (7) einsetzbar ist,
- die Dämpferwanne (12) einen Dampfauslasskanal (17) aufweist,
- die Dampfeinlassöffnung (18) oberseitig in der Vorkammer (19) eingebracht ist und
- der Dampfauslasskanal (17) von oben in die Dampfeinlassöffnung (18) einsetzbar ist, insbesondere dampfdicht.

5. Haushaltsgargerät (1) nach einem der vorhergehenden Ansprüche, wobei die Vorkammer (19) rückwärtig der Dämpferwanne (12) angeordnet ist und deren Auslassöffnung (22) über mindestens einen Luftleitkanal (25) mit der mindestens einen frontseitigen Dampfaustrittsöffnung (24) verbunden ist.

6. Haushaltsgargerät (1) nach einem der Ansprüche 4 bis 5, wobei im Bereich des Dampfauslasskanals (17) mindestens ein Temperatursensor angeordnet ist.

7. Haushaltsgargerät (1) nach einem der vorhergehenden Ansprüche, wobei der Deckel (14) im geschlossenen Zustand dampfdicht auf der Dämpferwanne (D) aufliegt.

8. Haushaltsgargerät (1) nach einem der vorhergehenden Ansprüche, wobei die Vorkammer (19) in der Dampfbehandlungsschublade (7; 32; 44) untergebracht ist.

9. Verfahren zum Ablassen von Dampf (D) aus einem Haushaltsgargerät (1; 31; 41) nach einem der vorhergehenden Ansprüche, aufweisend eine aus einem Schubladengehäuse (6) frontseitig horizontal ausfahrbare Dampfbehandlungsschublade (7; 32; 44), die eine mit Dampf (D) beaufschlagbare Dämpferwanne (12), deren offene Oberseite mittels eines Deckels (14) abdeckbar ist, aufweist, wobei bei dem Verfahren während eines Dampfbehandlungsvorgangs aus der Dämpferwanne (12) austretender Dampf (D) durch mindestens eine frontseitige Dampfaustrittsöffnung (24; 35; 47) des Haushaltsgargeräts (1; 31; 41) gefördert wird.

## Claims

1. Household cooking appliance (1; 31; 41), having
- a steam treatment drawer (7; 32; 44) that can be extended horizontally from the front of a drawer housing (6), which has a steamer tray (12), to which steam (D) can be supplied, with an open upper face that can be closed by means of a cover (14), and
- at least one fan (9; 26), which is provided to convey steam (D) exiting from the steamer tray (12) through at least one front steam outlet opening (24; 35; 47) of the household cooking appliance (1; 31; 41),
**characterised by** the household cooking appliance (1; 31; 41) also having
- a prechamber (19) with a steam inlet opening (18), which can be connected for air flow purposes to the steamer tray (12), and an outlet opening (22), which is connected for air flow purposes to the at least one front steam outlet opening (24),
wherein
- the steam inlet opening (18) is arranged on the intake side of the at least one fan (26) and the at least one front steam outlet opening (24) is arranged on the discharge side of the at least one fan (26)
and wherein the prechamber (19)
- either has a control opening (20) with variable flow cross section (Q) open to its surroundings, said control opening (20) being arranged on the intake side of the at least one fan (26),
- or has no control opening (20) with variable flow cross section (Q) open to its surroundings and the fan (26) is a speed-regulatable fan (26).

2. Household cooking appliance (1; 31) according to claim 1, in which at least one front steam outlet opening (24; 35) is configured by means of a gap between the drawer housing (6) and the steam treatment drawer (7; 32).

3. Household cooking appliance (1) according to one of the preceding claims, wherein, if the prechamber (19) has the control opening (20), the control opening (20) is assigned an adjustable closing flap (21) to set the flow cross section (Q).

4. Household cooking appliance (1) according to one of the preceding claims, wherein
- the steamer tray (12) can be inserted into the steam treatment drawer (7) from above,
- the steamer tray (12) has a steam outlet channel (17),
- the steam inlet opening (18) is incorporated in the upper face of the prechamber (19) and
- the steam outlet channel (17) can be inserted into the steam outlet opening (18) from above, in particular in a steam-tight manner.

5. Household cooking appliance (1) according to one of the preceding claims, wherein the prechamber (19) is arranged to the rear of the steamer tray (12) and its outlet opening (22) is connected by way of at least one air guidance channel (25) to the at least one front steam outlet opening (24).

6. Household cooking appliance (1) according to one of claims 4 to 5, wherein at least one temperature sensor is arranged in the region of the steam outlet channel (17).

7. Household cooking appliance (1) according to one of the preceding claims, wherein the cover (14) rests in a steam-tight manner on the steamer tray (D) in the closed state.

8. Household cooking appliance (1) according to one of the preceding claims, wherein the prechamber (19) is housed in the steam treatment drawer (7; 32; 44).

9. Method for releasing steam (D) from a household cooking appliance (1; 31; 41) according to one of the preceding claims, having a steam treatment drawer (7; 32; 44) that can be extended horizontally from the front of a drawer housing (6), which has a steamer tray (12) to which steam (D) can be supplied, with an open upper face that can be closed by means of a cover (14), wherein, during a steam treatment operation, steam (D) exiting from the steamer tray (12) is conveyed through at least one front steam outlet opening (24; 35; 47) of the household cooking appliance (1; 31; 41) with the method

## Revendications

1. Appareil de cuisson ménager (1, 31, 41) comprenant :
- un tiroir de traitement à la vapeur (7, 32, 44) déployable horizontalement à partir de l'avant d'un logement de tiroir (6), qui comprend un bac de cuisson à la vapeur (12) apte à recevoir de la vapeur (D) et dont le dessus ouvert peut être recouvert par un couvercle (14), et
- au moins un ventilateur (9, 26), qui est disposé de façon à acheminer de la vapeur (D) sortant du bac de cuisson à la vapeur (12) à travers au moins une ouverture de sortie de vapeur (24, 35, 47) à l'avant de l'appareil de cuisson ménager (1, 31, 41),
- **caractérisé en ce que** l'appareil de cuisson ménager (1, 31, 41) comprend en outre :
- une préchambre (19) comprenant une ouverture d'admission de vapeur (18), qui peut être reliée par technique d'aération au bac de cuisson à la vapeur (12), et une ouverture de sortie (22), qui est reliée par technique d'aération à l'au moins une sortie de vapeur (24) frontale,
dans lequel :
- l'ouverture d'admission de vapeur (18) est disposée du côté aspiration de l'au moins un ventilateur (26) et l'au moins une ouverture de sortie de vapeur frontale (24) est disposée du côté de pression de l'au moins un ventilateur (26),
et dans lequel la préchambre (19) :
- soit comprend une ouverture de commande (20) ouverte sur l'environnement ayant une section d'écoulement (Q) réglable de façon variable, laquelle ouverture de commande (20) est disposée du côté aspiration de l'au moins un ventilateur (26),
- soit ne comprend pas d'ouverture de commande (20) ouverte sur l'environnement ayant une section d'écoulement (Q) réglable de façon variable et le ventilateur (26) est un ventilateur (26) à vitesse réglable.

2. Appareil de cuisson ménager (1, 31) selon la revendication 1, dans lequel au moins une ouverture de sortie de vapeur frontale (24, 35) est formée au moyen d'une fente entre le logement de tiroir (6) et le tiroir de traitement à la vapeur (7, 32).

3. Appareil de cuisson ménager (1) selon l'une des revendications précédentes, dans lequel, si la préchambre (19) comprend l'ouverture de commande (20), un volet de fermeture réglable (21) permettant de régler la section d'écoulement (Q) est associé à l'ouverture de commande (20).

4. Appareil de cuisson ménager (1) selon l'une des revendications précédentes, dans lequel
- le bac de cuisson à la vapeur (12) est insérable par le haut dans le tiroir de traitement à la vapeur (7),
- le bac de cuisson à la vapeur (12) comprend un canal de sortie de vapeur (17),
- l'ouverture d'admission de vapeur (18) est introduite dans le côté supérieur de la préchambre (19), et
- le canal de sortie de vapeur (17) peut être inséré par le haut dans l'ouverture d'admission de vapeur (18), en particulier de façon à être étanche à la vapeur.

5. Appareil de cuisson ménager (1) selon l'une des revendications précédentes, dans lequel la préchambre (19) est disposée à l'arrière du bac de cuisson à la vapeur (12) et son ouverture de sortie (22) est reliée à l'au moins une ouverture de sortie de vapeur frontale (24) par l'intermédiaire d'au moins un canal de guidage d'air (25).

6. Appareil de cuisson ménager (1) selon l'une des revendications 4 à 5, dans lequel au moins un capteur de température est disposé dans la région du canal de sortie de vapeur (17).

7. Appareil de cuisson ménager (1) selon l'une des revendications précédentes, dans lequel le couvercle (14) repose à l'état fermé sur le bac de cuisson à la vapeur (D) de façon à être étanche à la vapeur.

8. Appareil de cuisson ménager (1) selon l'une des revendications précédentes, dans lequel la préchambre (19) est logée dans le tiroir de traitement à la vapeur (7, 32, 44).

9. Procédé d'évacuation de vapeur (D) à partir d'un appareil de cuisson ménager (1, 31, 41) selon l'une des revendications précédentes, comprenant un tiroir de traitement à la vapeur (7, 32, 44) déployable horizontalement à partir de l'avant d'un logement de tiroir (6), qui comprend un bac de cuisson à la vapeur (12) apte à recevoir de la vapeur (D) et dont le dessus ouvert peut être recouvert par un couvercle (14),
dans lequel, au cours du procédé durant une opération de traitement à la vapeur, de la vapeur (D) sortant du bac de cuisson à la vapeur (12) est acheminée à travers au moins une ouverture de sortie de vapeur (24, 35, 47) à l'avant de l'appareil de cuisson ménager (1, 31, 41).
